# FASCICULE DE BREVET EUROPEEN

(11) **EP 3 971 750 B1**
(45) Date de publication et mention de la délivrance du brevet: **15.05.2024**
(21) Numéro de dépôt: 21020134.9
(22) Date de dépôt: 06.12.2017
(51) Int. Cl.: G06F 21/57, G06F 21/87, H04W 4/80, H04L 9/08, H04L 9/32, G06F 21/71

(54) **PROCÉDÉS ET ENTITÉS NOTAMMENT TRANSACTIONNELS METTANT EN JEU DES DISPOSITIFS SÉCURISÉS**
PROZESSE UND EINHEITEN, INSBESONDERE TRANSAKTIONSBEZOGENE, DIE GESICHERTE VORRICHTUNGEN EINBEZIEHEN
METHODS AND ENTITIES, IN PARTICULAR TRANSACTIONAL, IMPLEMENTING SECURE DEVICES

(30) Priorité: 06.12.2016 US 201662430506 P; 15.11.2017 US 201762586190 P
(43) Date de publication de la demande: 23.03.2022
(62) Demande divisionnaire de: 17826553.4
(73) Titulaire: Maim, Enrico, 8835 Feusisberg (CH)
(72) Inventeur: Maim, Enrico, 8835 Feusisberg (CH)

(56) Documents cités:
- EP-A2- 1 273 997
- WO-A2-2016/120826
- FR-A1- 3 035 248
- US-A1- 2008 046 752
- US-A1- 2013 311 791

## Description

### Domaine de l'invention

L'invention concerne le domaine des procédés et systèmes notamment transactionnels mettant en jeu des dispositifs sécurisés.

### Arrière plan de l'invention

Le document WO2016120826A2 décrit un procédé de gestion d'engagements entre entités formant les noeuds d'un réseau, chaque entité étant logée dans une unité de traitement informatique.

### Résumé de l'invention

On propose selon un premier aspect un procédé tel que défini dans la revendication 1. Des aspects préférés sont définis dans les revendications dépendantes.

### Brève description des dessins

D'autres aspects, buts et avantages de l'invention apparaîtront mieux à partir des Figures ci-jointes.
La Figure 1 est une vue schématique en coupe transversale d'un circuit équipé d'une enveloppe sécurisée et de moyens de détection d'effraction,
La Figure 2 est un schéma-bloc d'un ensemble de circuits capables de surveiller mutuellement leurs enveloppes sécurisées,
Les Figures 3A et 3B illustrent en coupe transversale et en vue en plan un terminal de type smartphone équipé d'une certaine forme d'enveloppe sécurisée,
La Figure 4 illustre une authentification mutuelle de noeuds d'un réseau avec transmission d'attributs, et
La Figure 5 est un schéma bloc d'une entité mettant enjeu un circuit de traitement sécurisé et des blocs de détection.

### Description détaillée de formes de réalisation préférées

### I - Signature d'enveloppe

On va maintenant décrire un certain nombre de formes de réalisation possibles pour un dispositif de protection contre les attaques physiques d'un circuit possédant sa propre protection logique (par exemple les « Trusted Execution Environments » (TEE) ou des « Wallet Node Devices » tels que décrits dans WO2017122187A2), destiné à assurer une ou plusieurs fonctions ou transactions de façon sécurisée, ou toute combinaison de circuits à sécuriser.

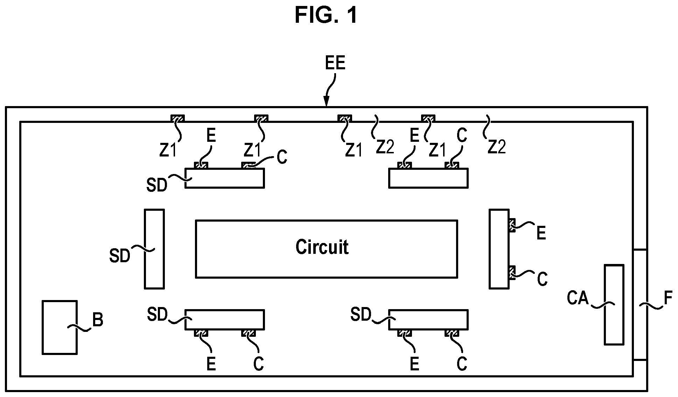

Dans une première approche, et en référence à la Figure 1, le dispositif met en oeuvre une enveloppe externe EE de préférence essentiellement continue, entourant le circuit à protéger et ayant certaines propriétés uniques.

Ces propriétés uniques peuvent être matérialisées par exemple par :
- la présence dans certaines zones Z1, dans la masse ou en revêtement, d'un certain matériau différent du matériau des autres zones Z2, ce matériau différent pouvant être détecté notamment par ses propriétés en réponse à un certain rayonnement ;
- dans une forme de réalisation concrète du principe ci-dessus, la présence d'un motif unique lisible optiquement, le matériau étant typiquement une encre ;
- la présence dans certaines zones d'un traitement de surface (rugosité, etc.), ce traitement pouvant être détecté notamment par ses propriétés en réponse à un certain rayonnement.

Ce motif peut être prédéfini ou généré aléatoirement, de façon à être unique à un circuit donné.

Par rayonnement, on entend ici de préférence un rayonnement électromagnétique allant des ondes radio aux ondes du domaine visible et même jusqu'à l'infrarouge.

Néanmoins, certaines formes de réalisation, notamment lorsque la taille de l'enveloppe augmente, peuvent mettre enjeu des ondes acoustiques, par exemple des ultrasons.

Le traitement du matériau de la coque exposé à ce rayonnement est déterminé en fonction de la nature et de la longueur d'onde du rayonnement : par exemple zones métallisées vs. non métallisées, réfléchissantes vs. absorbantes, réfléchissantes vs. diffusantes.

Par ailleurs, l'enveloppe, de façon intrinsèque ou grâce à un traitement spécifique postérieur à sa fabrication, peut inclure des fenêtres F, à savoir des zones transparentes vis-à-vis de tel type de rayonnement, permettant notamment à des capteurs (capteur optique de type caméra CA ou autre, antenne, capteur sonore ou ultrasonore, etc.) de pouvoir capter le rayonnement en question provenant de l'extérieur, et/ou permettant notamment à des sources de tels rayonnements d'émettre vers l'extérieur.

Le dispositif comprend en outre une structure de détection interne SD en une ou plusieurs parties s'étendant à l'intérieur de l'enveloppe EE et capable de scruter cette enveloppe et de générer un signal destiné à être signé avec une clé privée du circuit pour témoigner de la non-altération de l'enveloppe.

Cette structure de détection comprend dans une forme de réalisation un circuit possédant un ou plusieurs émetteurs E de rayonnement en combinaison avec un ou plusieurs capteurs C, organisés par exemple en matrice ou de façon modulaire, ce circuit étant apte à communiquer de façon sécurisée avec une partie cryptographique du circuit à protéger, qui réalisera la signature du signal fourni avec la clé privée susmentionnée.

Le dispositif est alimenté soit par une batterie dédiée B logée à l'intérieur de l'enveloppe, soit par la batterie, également interne, qui alimente le circuit C.

Dans une forme de réalisation particulière, les émetteurs émettent des signaux qui sont réfléchis ou diffusés ou absorbés par les matériaux ou revêtement différents sur la face interne de l'enveloppe, et les capteurs reçoivent les signaux de retour.

On comprend qu'à un motif donné de l'enveloppe E va correspondre une configuration unique de signaux recueillis, et que si le motif a été déplacé ou altéré, les signaux recueillis vont également être altérés.

De préférence, dans le cas de plusieurs capteurs, les signaux générés en sortie par ceux-ci sont combinés (combinaison analogique ou numérique, par exemple par multiplication, multiplexage, etc.), et le signal global formé, dit signal d'enveloppe, est signé à l'aide de la clé privée du circuit, pour former une signature d'enveloppe unique (ci-après ES) correspondant à une enveloppe intacte.

Dans le cas où le ou les capteurs délivrent des signaux analogiques, on y associe de façon connue en soi des moyens de traitement (amplification, filtrage, etc.) et de conversion analogique/numérique de façon à obtenir un signal numérique.

Ce signal numérique est soumis à une fonction de hachage, le haché étant ensuite chiffré avec une clé privée du circuit et mémorisée (ou dynamiquement régénérée par procédé PUF - Physical Unclonable Function - voir explications sur https://en.wikipedia.org/wiki/Physical_unclonable_function) dans celui-ci de façon inaccessible de l'extérieur, pour obtenir la signature d'enveloppe.

A cette clé privée est associée une clé publique certifiée par le fabricant du circuit ou de l'ensemble du dispositif, cette clé publique pouvant utilisée par d'autres dispositifs pour vérifier l'origine et le haché du signal d'enveloppe.

Dans une autre forme de réalisation, le ou les capteurs délivrent directement un signal numérique, les signaux numériques des différents capteurs étant combinés (par exemple concaténés), et le haché de cette combinaison étant chiffré avec la clé privée comme précité pour générer la signature d'enveloppe.

On notera que le motif intégré à l'enveloppe peut être conçu pour permettre de détecter non seulement des attaques mécaniques sur l'enveloppe, induisant inévitablement une altération ou un déplacement du motif, mais également des attaques à travers l'enveloppe (par exemple « Focused Ion Beam », etc.)

De façon également avantageuse, l'enveloppe assure également une protection au niveau des conducteurs d'alimentation du circuit, de manière à éviter une tentative de fraude impliquant une coupure de l'alimentation.

La structure de détection comprend ses propres drivers pour le(s) émetteur(s) et le(s) capteurs, et communique avec le circuit à protéger selon un protocole approprié.

Le signal d'enveloppe est généré soit de façon régulière à l'initiative du circuit à protéger ou à l'initiative de la structure de détection SD (celle-ci étant alors cadencée par sa propre horloge), soit sur demande du circuit à protéger.

Dans une forme de réalisation, le signal d'enveloppe peut être combiné à une information d'horodatage avant d'être signé.

Dans une forme de réalisation, un log du signal d'enveloppe - éventuellement horodaté - est enregistré dans une mémoire protégée ad hoc accessible par le circuit à protéger, l'enregistrement s'effectuant de préférence après signature.

On peut prévoir un fonctionnement du circuit à protéger en autoprotection. Dans ce cas, ledit circuit se neutralise dès qu'il a détecté que le signal d'enveloppe a été altéré par une tentative d'intrusion. Le circuit peut également envoyer un message d'alerte à un ou plusieurs autres dispositifs, pour rajouter un degré de sécurité pour le cas où le mécanisme d'auto-neutralisation aurait été contourné.

L'enregistrement des signatures d'enveloppe horodatées dans un log permet par ailleurs de détecter une coupure d'alimentation temporaire du circuit. En effet il sera alors impossible de reconstituer a postériori les signatures de signal d'enveloppe horodaté précédentes.

Dans une variante de réalisation, le motif « inscrit » dans l'enveloppe peut constituer une mémoire auxiliaire de certaines données relatives au circuit. Par exemple, ce motif peut également constituer un identifiant du circuit. Dans ce cas, le signal d'enveloppe constitue un signal d'identification du circuit.

En outre le circuit à protéger peut appartenir à un dispositif dans un environnement où des dispositifs sont appariés les uns avec les autres (par exemple des SoC ou des « Wallet Node Devices » tels que décrits dans WO2016120826A2 et WO2017122187A2), par exemple en formant des entourages (voir plus bas).

Lors de l'appariement entre dispositifs, les signatures d'enveloppe respectives sont mutuellement communiquées et mémorisées, et on prévoit que lors des interactions ultérieures entre dispositifs appariés, les signatures d'enveloppe soient à nouveau transmises. Un deuxième dispositif apparié avec un premier dispositif est donc capable de déterminer par comparaison du haché courant avec le haché communiqué lors de l'appariement, que l'enveloppe du premier dispositif n'a pas été altérée, et inversement.

A cet occasion, si le signal d'enveloppe a été complété par une information d'horodatage au niveau du dispositif source, le dispositif destinataire peut également après déchiffrement déterminer si l'information d'horodatage contenue dans le message en association avec le signal d'enveloppe est normale.

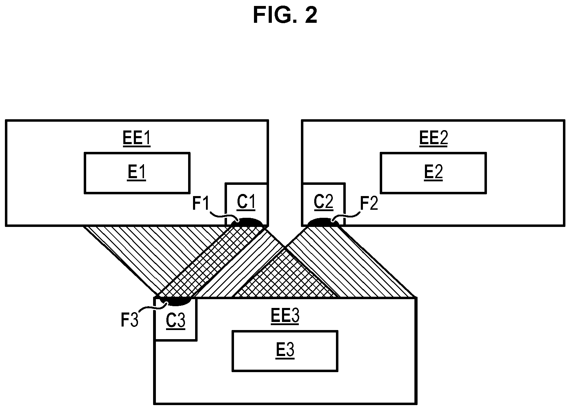

Le mécanisme de signature d'enveloppe tel que décrit ci-dessus peut être implémenté de différentes manières :
- on peut ainsi loger dans une même enveloppe un ensemble constitué par un circuit principal (implémentant par exemple un wallet node) combiné à un ou plusieurs capteurs et/ou un ou plusieurs actionneurs comme décrit dans la demande de brevet US 62/430,506 déposée le 5 décembre 2016, et dont le contenu est incorporé ici par référence.
- alternativement, et en référence à la Figure 2, chaque de ces éléments E1, E2, E3 peut posséder sa propre enveloppe EE1, EE2, EE3 telle que décrite dans ce qui précède. Dans ce cas, chaque élément peut surveiller sa propre enveloppe de l'intérieur, mais chaque élément peut également disposer d'un ou plusieurs capteurs C1, C2, C3 opérant à travers une ou plusieurs fenêtres respectivement F1, F2, F3 de sa propre enveloppe et aptes à surveiller l'enveloppe d'un élément voisin. Une enveloppe disposera ainsi d'une signature « interne » d'enveloppe unique, et d'une ou plusieurs signatures « externes » d'enveloppe uniques établies par des éléments (capteurs, actionneurs, circuit de wallet node, autres circuits, ...) situés de façon fixe au voisinage.

Dans ces conditions, si l'on tente une effraction sur l'un des éléments, il faudrait simultanément réaliser une effraction sur le ou les éléments voisins qui surveillent l'enveloppe de l'élément en question pour les neutraliser. Cette nécessité d'une effraction simultanée sur deux ou plusieurs éléments d'un même ensemble rend toute fraude impossible.

La surveillance d'une enveloppe de circuit par l'intérieur ou par l'extérieur peut être complétée par la surveillance de paramètres environnementaux du circuit considéré ou de son ou ses voisins (température, fréquence d'horloge, etc.).

D'autres formes de réalisation d'une enveloppe à signature unique sont possibles.

### 1) Enveloppe souple

Une enveloppe peut être réalisée en un mince matériau ayant une certaine capacité à déformation plastique, son application autour d'un circuit mettant en jeu des efforts qui l'amènent à adopter une configuration géométrique unique pour chaque circuit. L'échelle à laquelle les formes sont différentes peut varier. Une structure de détection basée sur l'émission d'un rayonnement dans la gamme du visible ou du proche invisible (UV par exemple) permet de détecter à l'aide de capteurs optiques ou UV appropriés (par exemple par détection de figures d'interférence) des variations micrométriques de la forme de l'enveloppe, chaque enveloppe ayant une signature unique.

Dans une forme particulière, cette enveloppe peut être réalisée en une résine déformable durcissable aux UV, dotée sur sa surface interne d'un film en couche mince, par exemple une couche métallique (assurant en même temps un blindage électromagnétique) apte à réfléchir le rayonnement émis vers lui par la structure de détection. Des différences micrométriques dans la forme de l'enveloppe et donc de la couche mince vont engendrer des configurations de détection par un ensemble de capteurs optiques qui sont à chaque fois uniques.

### 2) Autres approches tirées de l'art existant

a) Brevet US2011267190A1 : un émetteur situé de façon interne à une enveloppe de sécurité du circuit émet une signature HF qui est réfléchie par la face interne de ladite enveloppe, le signal réfléchi étant capté par une antenne de réception ; si l'enveloppe a été altérée, le signal réfléchi n'est plus conforme au signal attendu et une attaque physique est ainsi détectée ;
b) Brevet US9059189 B1 : circuit intégré doté à l'intérieur de son boîtier d'un système d'émission/réception d'ondes radiofréquences (RF) capable de générer une signature particulière dans les domaines temporel et fréquentiel, le signal RF et donc la signature étant altérés en cas de conditions anormales ;
c) Brevet US9455233B1 : un circuit est entouré d'un micro-grillage de fils conducteurs qui permet la détection d'une tentative d'effraction par « micro-probing » ;
d) Brevet US9661747B1 : couche d'enveloppe de sécurité flexible avec motifs réalisés avec une encre conductrice, et moyens de détection associés ;
e) Brevet US2007175023A1 : emballage souple de circuit coopérant des couches de « trace » de sécurité possédant des motifs conducteurs par exemple en serpentin ;
f) Brevet US2007234058A1 : authentification d'un produit par comparaison d'un motif dit de « laser speckle » avec un motif de référence ; si le produit a été altéré (contrefait), la signature ne correspond plus ;
g) Brevet US2013104252A1 ou US2016211843A1 : utilisation d'un treillage de fils conducteurs véhiculant un code numérique variable ;
h) Brevet US2015097572A1 : enveloppe dotée d'un réseau de conducteurs avec configuration de contacts variable générée à la fabrication, unique pour chaque circuit ;
i) Brevet US2017135237A1 : enveloppe flexible avec motifs conducteurs et création de zones en recouvrement lors de son application sur un boîtier ;
j) Brevet WO2017050910A1 : configurations variables d'un réseau de cellules reliées électriquement, ayant chacune une impédance caractéristique unique ;
k) article sous le lien http://www.informit.com/articles/article.aspx?p=28170&seqNum=3 qui décrit un certain nombre de techniques permettant d'éviter l'accès (mécanique, électrique voire optique) à un circuit à protéger.

### 3) Approches acoustiques

Il est possible de transposer des principes de certains brevets ci-dessus à l'univers des ondes acoustiques (typiquement des ultrasons), l'enveloppe incorporant dans ce cas des canaux susceptibles de véhiculer les ondes acoustiques de façon directionnelle, et une rupture dans la continuité de l'enveloppe provoquant une interruption de la conduction des ondes acoustiques d'un émetteur vers un récepteur.

### 4) Enveloppe pour appareil du commerce

L'invention peut également être mise en oeuvre avec des dispositifs électroniques formés d'appareils tels que des smartphones.

Dans ce cas, une enveloppe sécurisée entoure au moins une partie du smartphone (en tout cas la partie qu'il faudrait nécessairement ouvrir pour altérer physiquement le contenu du smartphone).

Cette enveloppe est conçue pour véhiculer d'une façon unique des signaux entre un émetteur émis à partir du smartphone et un récepteur également situé dans le smartphone.

Par exemple, la coque peut être agencée pour être en communication acoustique avec le haut parleur du smartphone et avec son microphone, et pour véhiculer de façon unique (par exemple avec un profil de réponse en fréquence unique, par choix d'une configuration de matériau de la coque) un certain signal acoustique généré au sein du smartphone et émis par le haut-parleur, en direction du microphone (les ondes acoustiques étant propagées dans la masse de la coque, par exemple sous la forme d'ondes de surface).

Si le signal capté par le microphone ne possède pas les caractéristiques attendues, cela signifie que soit la coque a été retirée, soit elle a été altérer pour accéder à l'intérieur du smartphone.

Un principe analogue peut être mis en oeuvre avec des signaux optiques émise par l'écran d'affichage du smartphone (partiellement couplé optiquement avec la coque) et recueillis par une caméra du smartphone (ici encore partiellement couplée optiquement avec la coque.

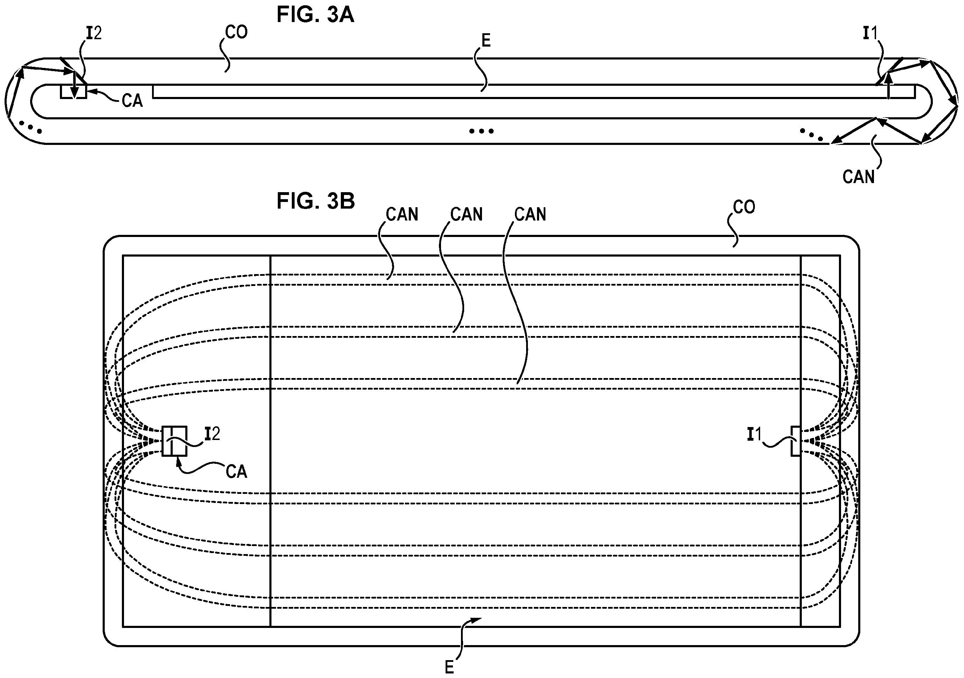

Un exemple de propagation des signaux optiques dans la coque est illustré schématiquement sur les Figures 3A et 3B.

La coque CO comporte en son sein une interface de réflexion interne I1 au regard d'une zone particulière de l'écran d'affichage E, par exemple une petite zone latérale couvrant quelques pixels et une autre interface de réflexion interne I2 au regard d'une zone particulière de la caméra CA, ou encore (pour ne pas encombrer le champ de vision de la caméra) une interface de diffusion répartissant le signal optique sur l'optique de la caméra. On notera ici sur la commande de la caméra CA peut être conçue soit pour ne prendre des images que pendant les périodes d'absence du signal optique. Alternativement, le signal optique diffusé peut être suffisamment faible pour ne pas perturber significativement les images prises par la caméra CA.

Ainsi il est possible d'émettre, par commande de l'affichage, un signal optique avec modulation d'intensité et/ou variation spectrale dans le temps (de préférence un signal unique pour chaque smartphone), qui se propage après la réflexion interne sur I1 dans la coque jusqu'à l'interface I2 et donc jusqu'à la caméra CA.

Ce signal parcourt l'ensemble du pourtour du smartphone en étant par exemple réparti dans un ensemble de canaux optiques CAN formant un réseau de lignes parallèles, un treillage, etc. Si l'un des canaux est interrompu pour cause d'effraction sur la coque, alors l'intensité globale reçue au niveau de la caméra est abaissée, et/ou la caractéristique spectrale du signal reçu est altérée, a composant, et cette effraction est ainsi détectée.

Dans le cas où une telle coque est accidentellement fracturée, la signature d'enveloppe est altérée, et le circuit n'est plus considéré comme fiable. Un nouvel appariement avec une nouvelle coque est alors nécessaire.

### II - Interactions entre dispositifs

Les documents WO2016120826A2 et WO2017122187A2 décrivent notamment :
- des méthodes permettant une identité décentralisée dans un réseau en P2P et
- des systèmes de Wallet Node Device (ci-après WND) - appelé Body SoC ou Body Enclave - hébergeant des Wallet Nodes (WN) exécutant des Wallet Programs (WP, « smart contracts ») sur des protocoles d'interactions, notamment de transfert de tag-valeurs - appelés Tags - (tels que des Bitcoins), entre WN, mettant en oeuvre des WND miroirs.

Les procédés et systèmes décrits dans le présent chapitre étendent ou sont des variantes à ceux déjà décrits et visent à les fiabiliser davantage.

On va ici tout d'abord décrire une nouvelle famille de procédés d'identification décentralisée de noeuds formant un réseau de pair à pair, avant de décrire les moyens hardware et un protocole pour tirer parti de la décentralisation au niveau des fabricants de WND.

Classiquement, chaque noeud génère localement (par exemple dans le browser) une paire de clés cryptographiques (privée/publique) et y associe des attributs (tels que le nom de l'individu que le noeud représente) le caractérisant. Les clés servent à (i) identifier le noeud, éventuellement en générant l'adresse du noeud sur le réseau à partir de la clé publique (typiquement, c'est le haché (ou le haché du haché...) de la clé publique) (ii) à chiffrer les contenus transmis (avec la clé publique du destinataire, le destinataire les décryptant avec sa clé privée) et (iii) les signer (avec la clé privée de l'émetteur, le destinataire vérifiant la signature avec la clé publique de l'émetteur).

### 1) Appariement - échange de clés publiques

Pour former un lien dans le réseau (c'est-à-dire pour être « connectés directement ») deux noeuds (dispositifs) doivent être appariés, c.à.d. s'échanger leurs clés publiques respectives, ainsi que des attributs associés à chaque clé, qui sont à faire valider par le noeud destinataire (le destinataire reconnait ainsi les attributs associés à la clé), en utilisant un protocole parmi un ensemble de protocoles sécurisés qui leurs sont à disposition (selon les technologies disponibles dans les dispositifs - voir les procédés d'appariement décrits plus loin).

On notera que les dispositifs eux-mêmes doivent être sécurisés sur le plan logique - voir à ce sujet la description des WND dans les demandes précitées.

Cet appariement s'effectue de préférence avec une protection contre une « Man-in-the-middle (MitM) attack » : il s'agit de préférence d'un échange de clés publiques lors d'une rencontre physique, ou à distance mais de manière spécialement sécurisée. A noter que dans la suite, lorsque l'on parle de transmission (ou échange) de clés publiques, on entend transmission (ou échange) de clés publiques ou d'adresses. A noter aussi que, bien qu'un lien (d'authentification) entre deux noeuds ne soit pas forcément bidirectionnel, ci-après pour faciliter la lecture du texte on ne décrit que les échanges de clés publiques de manière bidirectionnelle - les procédés décrits ci-dessous peuvent être exécutés de manière unidirectionnelle (le lecteur pourra aisément les comprendre dans ce sens).

Ces clés publiques ainsi échangées permettent de chiffrer les attributs et les transmettre ainsi de manière sécurisée (voir aussi les protocoles décrits ci-après qui proposent en plus des moyens de transmission de données chiffrées par clé symétrique). Et la connaissance des clés publiques, et attributs associés, se propage ainsi de proche en proche (voir la section Entourage (Neighborhood) d'un noeud).

La vérification de l'authenticité d'une clé publique reçue s'effectue de la façon suivante.

Tout d'abord on sait déjà vérifier qu'il n'y a pas eu d'usurpation d'identité numérique : classiquement, un utilisateur A envoie un nonce (nombre aléatoire à usage unique) à un utilisateur B ; l'utilisateur B signe le nonce et cette signature peut être vérifié par A en la décryptant avec la clé publique de B. Cela permet donc d'éliminer un utilisateur B' qui connaîtrait la clé publique de B et tenterait d'usurper ainsi son identité numérique.

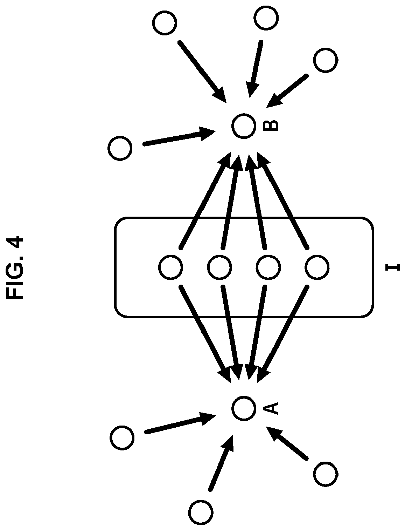

Deuxièmement, lorsqu'un noeud transmet à un autre noeud ses attributs, il reçoit en retour une confirmation qu'effectivement ces attributs le caractérisent. Ainsi, pour que deux noeuds s'authentifient mutuellement, il suffit qu'ils aient des confirmations de leurs attributs par un nombre suffisant de noeuds en commun. La Figure 4 montre que les noeuds « A » et « B » s'authentifient mutuellement du fait que l'intersection « I » des ensembles respectifs de noeuds desquels ils ont reçu confirmation de leurs attributs est suffisamment grand (cette intersection comprend 4 noeuds dans la figure - noter qu'en général les échanges et confirmations d'attributs se font dans les deux sens, mais ceci n'est pas montré dans la Figure 4 pour se focaliser sur le procédé en question). Avantageusement, le noeud qui authentifie ne va accepter dans l'ensemble « I » que les noeuds dont il a lui-même confirmé des attributs. En variante, cette même approche peut être utilisée pour mettre en oeuvre l'authentification dans chaque sens séparément : ainsi pour authentifier le noeud « B » de la figure, le noeud « A » doit avoir confirmé les attributs de suffisamment de noeuds (qui peuvent être ici vus comme formant l'ensemble « I » de la figure) qui ont à leur tour confirmé des attributs du noeud B de la figure. En complément, des méthodes pour déterminer des poids de connexion ou des scores d'attributs peuvent être utilisées, dont certaines sont décrites dans la première partie du texte, ces méthodes permettent de s'authentifier de manière plus large, l'exigence de noeuds en commun (c'est-à-dire l'intersection « I ») étant rendue moins stricte en acceptant également un nombre suffisant de noeuds différents mais fortement connectés entre eux ou ayant de forts scores selon le noeud qui authentifie.

Enfin, avant d'accepter un nouveau noeud dans le réseau ou dans le cas où il n'y a pas un nombre suffisant de confirmations par des noeuds en commun (ou fortement connectés entre eux), il faut utiliser un protocole tel que ceux décrits ci-après (et qui sont analogues aux procédés d'« IRL-connection ») pour transmettre les clés et attributs de manière sécurisée (pour mitiger le risque d'un MitM attack).

### 2) Appariement - capture et retour de signaux localement

Pour sécuriser davantage un appariement, on propose ici des techniques de capture et retour de signaux aléatoirement et localement générés de part et d'autre par au moins deux dispositifs (typiquement des smartphones) qui se trouvent à proximité physique l'un de l'autre (ces signaux pouvant être par exemple un affichage flash d'un certain motif optique, par exemple un QR-Code, sur un dispositif et un instantané de ce motif par la caméra de l'autre dispositif, de manière mutuelle), les dispositifs communiquant ensuite entre eux de manière chiffrée en utilisant ces signaux dans le but de mitiger le risque de MitM.

Avantageusement, le procédé comprend un protocole de handshaking pour fixer le (ou les) moment(s) de présentation/capture du signal (ou des signaux).

Dans le cas particulier d'un mode de réalisation exploitant des signaux optiques, deux dispositifs munis de moyens de lecture optique (tels que deux smartphones, utilisant une app donnée) se coordonnent selon un protocole de handshaking optique (par affichage de codes tels que des QR-Codes, selon des règles prédéterminées, en fonction de codes lus à partir de l'autre dispositif), pour déterminer l'instant précis où ils doivent prendre ledit instantané, et présentent l'un à l'autre (par affichage flash à cet instant précis) un code optique généré aléatoirement et ne servant qu'une seule fois, les dispositifs devant à cet instant précis être typiquement mis dans une position prédéterminée relativement à l'autre (typiquement, chacun doit faire face à l'autre) pour que le code affiché puisse être lu complètement.

Ledit code capté peut en variante être constitué d'une séquence de signaux optiques.

Des procédés analogues peuvent être mis en oeuvre avec des signaux d'autres types, par exemple des signaux infrarouges codants, des signaux radio codants, des signaux acoustiques codants. Dans ce dernier cas le microphone d'un smartphone doit être suffisamment rapproché du haut-parleur de l'autre smartphone, et inversement, pour éviter l'impact des bruits ambiants.

Quel que soit le véhicule des signaux, chaque dispositif émet de la sorte, dans une relation à courte portée un nonce à destination de l'autre dispositif, ces nonces échangés permettant, en chiffrant les communications en utilisant le contenu des nonces, à chaque dispositif d'assurer que c'est bien le dispositif avec lequel l'appariement est désiré qui émet.

La capture de ces nonces étant effectuée de part et d'autre, les transferts de données entre dispositifs sont ensuite effectués selon au moins l'une des méthodes suivantes :
- dans un premier cas, les transferts de données entre les dispositifs sont effectués après avoir (i) généré (au moins) une clé symétrique à partir des nonces, clé que les dispositifs doivent garder secrète) et (ii) après avoir chiffré avec cette clé les autres données à transmettre ; ainsi, dans le cas optique, une clé symétrique est générée à partir d'une combinaison desdits codes lisibles optiquement qui ont été présentés de part et d'autre. Avantageusement, cette clé symétrique est éphémère (elle ne sert que pour la transmission de données juste après sa génération et n'est plus valide ensuite) ;
- dans un second cas, où les dispositifs génèrent chacun une paire de clés publique/privée, en premier sont échangées les clés publiques, accompagnées de signatures décryptables au moyen de ces clés, signatures dont le contenu inclut une partie générée à partir du nonce capté pour prouver que la clé en question n'a pas été transmise par un MitM, ce que les destinataires respectifs vérifient (en décryptant la signature et en en vérifiant la partie générée à partir du code capté), puis les transferts de données de chacun vers l'autre sont effectués de manière sécurisée en les chiffrant (seulement ou en plus) avec la clé publique de l'autre. Ici encore, avantageusement, la validité du code capté dans la signature est éphémère.

Lorsque les dispositifs sont aptes à communiquer directement par NFC ou par un moyen analogue, les clés sont échangées entre les dispositifs directement (sans passer par un réseau). Dans le cas inverse, le fait que les données soient chiffrées (par clé symétrique ou par les clés publiques respectives, comme décrit ci-dessus) garantit aussi la sécurité de la transmission lors d'un transit via des noeuds non-fiabilisé du réseau ou via un serveur intermédiaire non-fiabilisé (« non trusted »).

### 3) Appariement avec données biométriques

En plus de l'appariement avec nonces transmis en proximité selon le point 2) ci-dessus, on peut mettre en oeuvre une capture de part et d'autre de données biométriques.

Pour en décrire un cas particulier, prenons un mode de réalisation avec capture d'empreintes digitales : chaque dispositif capte une empreinte digitale de l'utilisateur de l'autre dispositif (appelé dans la suite « l'autre utilisateur ») ainsi que de son propre utilisateur (appelé « l'utilisateur ») et les empreintes captées permet ici de générer les formes canoniques (reproductibles) respectives de celles-ci.

(Le calcul de forme canonique d'empreintes digitales est connu : les chercheurs Senior et Bolle ont proposé en 2001 une forme canonique sur la base d'une représentation où toutes les crêtes sont également espacées et les lignes de crête sont approximées par des « spline curves », la reconnaissance étant basée sur l'écart avec une distance moyenne entre crêtes. D'autres chercheurs ont ensuite proposé des formes canoniques encore plus élaborées, notamment Lee, Choi et Kim en 2002, Lorch, Morguet et Schroeder en 2004, Bhowmick et Bhattacharya en 2004, et Ross et Nadgir en 2008).

D'une manière générale on sait générer une forme canonique pour pratiquement tous types de données biométriques.

On propose selon cet aspect, à partir d'une forme canonique de données biométriques (de type quelconque) captées de part et d'autre par des dispositifs d'utilisateurs qui se rencontrent physiquement, tels que smartphone, laptop, etc., d'utiliser le procédé général décrit plus haut en incluant au sein des contenus signés échangés des données générées selon des règles préétablies à partir de la forme canonique des données biométriques.

Bien entendu, comme aussi décrit plus haut, les captures de données biométriques peuvent se faire en séquence.

La combinaison de l'utilisation d'un nonce capté mutuellement par un mode de transmission en proximité, menant à une clé symétrique et donc à une signature éphémère, permet de se protéger d'un « replay » de l'échange des données biométriques par un fraudeur.

Avantageusement, les formes canoniques de données biométriques transmises constituent en soi des attributs (qui, comme décrit plus haut, sont confirmés de part et d'autre et sont associés aux clés publiques respectives). Des étapes de transmission d'attributs biométriques peuvent aussi être prévues éventuellement pour corroborer les données biométriques respectives captées.

### 4) Appariement avec données cinématiques

L'approche est ici la suivante : les dispositifs génèrent une clé symétrique de chiffrement à partir (notamment) de données cinématiques communes à haute définition produites lors d'un contact physique (choc) entre eux et non dévoilées, ces données pouvant typiquement provenir d'un accéléromètre ou d'une centrale inertielle de chaque dispositif.

D'autres informations (signaux GPS, signaux d'horloge, signaux optiques captés par la caméra, signaux acoustiques captés par le microphone, signaux NFC, etc.) peuvent également être utilisées en combinaison avec données cinématiques.

Les données (cinématiques seules ou combinées) sont utilisées pour générer une clé symétrique éphémère pour chiffrer des données non communes à communiquer entre les dispositifs - telles que notamment leurs clés publiques respectives. Alternativement les dispositifs se transmettent en premier leurs clés publiques respectives mais avec une signature des données communes (provenant des accéléromètres respectifs, etc.) qu'eux seuls connaissent, prouvant ainsi que la clé publique en question ne provient pas d'un MitM, cette communication pouvant ainsi se faire sans risque notamment via un réseau non-trusted (ou serveur intermédiaire non-trusted).

Plus concrètement, deux terminaux (tels que des smartphones modernes, utilisant une app donnée) ayant au préalable généré chacun une paire de clés sont en bref contact physique (choc) et leurs accéléromètres mesurent le choc produit par ce contact ce qui provoque une même mesure (au signe près) de part et d'autre, que seuls ces dispositifs connaissent.

Cette donnée commune, ainsi qu'éventuellement d'autres données communes incluant par exemple la géolocalisation et l'instant précis du choc, sont utilisées pour générer une clé symétrique de chiffrement (à partir de données communes que seuls les terminaux connaissent).

Des données non communes peuvent ensuite être chiffrées avec cette clé symétrique en local (par exemple, au niveau de l'application, sur chaque smartphone) et transférées entre les deux dispositifs (même via un réseau non-trusted, par exemple via un serveur, ce serveur ne pouvant donc voir les données transmises). Notamment, chaque dispositif peut générer une paire de clés privée/publique, et la clé publique, ainsi qu'une signature décryptable avec celle-ci, sont chiffrées avec cette clé symétrique puis transmises (avantageusement, le contenu signé peut inclure lesdites données communes). Ici encore, avantageusement, la validité de cette clé symétrique est éphémère.

Alternativement, les deux dispositifs génèrent chacun une paire de clés privée/publique et chaque clé publique est transmise à l'autre dispositif (de préférence directement par NFC ou par un autre canal de communication approprié, ou via un réseau non-trusted), en même temps que la signature (décryptable par cette clé publique) du hash des données communes qu'eux seuls connaissent (pour prouver que la clé en question n'a pas été transmise par un MitM), ce que les destinataires respectifs vérifient (en décryptant la signature avec la clé reçue et en vérifiant les données communes). D'autres données non communes peuvent ensuite être transmises de manière chiffrée avec la clé publique du destinataire. Ici encore, avantageusement, la validité desdites données communes figurant dans la signature est éphémère.

Pour résumer, soit les dispositifs génèrent une clé symétrique de chiffrement à partir de données communes de précision adéquate produites lors d'un contact physique entre eux et non dévoilées, provenant de l'accéléromètre du dispositif et/ou de l'horloge, du GPS, etc., et utilisent cette clé symétrique pour chiffrer des données non communes (qu'ils se communiquent de manière chiffrée), soit les dispositifs se transmettent leurs clés publiques respectives avec une signature (dont le contenu signé inclut) des données communes, prouvant ainsi qu'elle ne provient pas d'un MitM.

D'autres procédés de protection d'un MitM attack sont décrites dans les demandes WO2016120826A2 et WO2017122187A2 précitées et les dispositifs peuvent les utiliser en positions de repli lorsqu'ils ne sont pas équipés des moyens techniques requis (écran, caméra, capteur d'empreinte digitale, accéléromètre...) ou lorsqu'ils ne se rencontrent que virtuellement (dans ces demandes on propose alors un procédé dit en « out-of-band channel », comme par oral, pour transmettre un passphrase et en recevoir le hash en retour au sein d'un contenu signé décryptable avec la clé publique reçue).

### III - Protection d'un groupe de dispositifs contre les « Sybil Attacks »

Dans la mesure où deux dispositifs exécutent fidèlement l'un des procédés décrits ci-dessus (ou décrits dans l'un des documents WO2016120826A2 et WO2017122187A2), non seulement leurs utilisateurs sont protégés d'un « MitM attack » mais de plus, comme on va le voir maintenant, ils peuvent être protégés d'un « Sybil attack ».

Le principe est le suivant : si un utilisateur U1 rencontre un par un (individuellement, physiquement ou par un « out-of-band channel ») d'autres utilisateurs U2... Un (i.e. les utilisateurs respectifs des autres dispositifs desquels son dispositif reçoit des clés publiques comme décrit jusqu'ici), alors l'utilisateur U1 peut s'assurer que la majorité des clés qu'il reçoit sont effectivement celles des autres utilisateurs desquels il les reçoit, et ne sont pas des clés faisant partie d'une profusion de clés contrôlées par un adversaire (définition même du Sybil attack).

Notamment, si la majorité de ces clés est bien « non-Sybil », le procédé d'interaction redondantes entre WN via des WND miroirs (décrit dans WO2016120826A2 et WO2017122187A2) lui garantit alors que, s'il fait confiance à un fabricant unique ou si les fabricants respectifs WND miroirs sont suffisamment différents (voir plus loin le « protocole en trois niveaux »), les WN avec lesquels il interagit (notamment ceux aux feuilles de l'uptree (déjà décrit plus haut) d'une transaction dont il reçoit des tag-valeurs tel que des Bitcoins) sont fiables, c'est-à-dire qu'ils respectent bien leurs engagements par rapport aux smart contracts exécutés (notamment ils ne font pas de double spend).

Pour ce faire, l'utilisateur doit s'assurer que l'autre utilisateur (qu'il rencontre individuellement) lui transmet une seule clé publique (représentant son identité) ou, au plus, un nombre restreint de clés publiques (représentant différentes identités pour ce même individu), cette restriction pouvant dépendre des fabricants des autres dispositifs desquels il a reçu des clés, (notamment des fabricants des WND miroirs de son WN,) de manière à garantir une diversité des fabricants (au moins des fabricants de ses WND miroirs), ou dépendre d'encore autres facteurs.

L'invention propose alors que le dispositif de l'utilisateur effectue la reconnaissance biométrique de l'autre utilisateur (dont le dispositif lui transmet une clé publique) et ne valide (c'est-à-dire n'accepte) qu'un seul ou un nombre restreint de clés publiques transmis par un même autre utilisateur. Lors de chaque transmission, au dispositif de l'utilisateur, d'une clé publique, par un autre utilisateur, les données biométriques de ce dernier sont mémorisées par le dispositif de l'utilisateur. Ainsi, un même autre utilisateur qui retransmet une nouvelle clé publique est reconnu (par ses données biométriques qui ont déjà été mémorisés lors d'une transmission de clés précédente). De préférence cette reconnaissance par le dispositif de l'utilisateur se base sur une pluralité de données biométriques de types différents (en parallèle) afin de tendre à garantir que lorsque l'utilisateur d'un autre dispositif n'est pas reconnu c'est qu'effectivement il n'a encore transmis aucune clé publique au dispositif de l'utilisateur.

Ainsi, les procédé décrit plus haut (points 2) et 3)) de capture de signaux aléatoires et données biométriques de part et d'autre, qui était simplement destiné à protéger le dispositif de l'utilisateur d'un MitM attack, sert maintenant en plus à restreindre le nombre de clés publiques transmises par un même autre utilisateur (en fonction notamment, avantageusement, des fabricants des dispositifs qui les ont fournis) au dispositif de l'utilisateur et lui permet de se protéger ainsi d'un Sybil attack.

### 1) Entourage (Neighborhood) d'un noeud

En plus de sa (ou ses) propre(s) clé(s) publique(s) et des attributs associés, chaque dispositif peut transmettre à un autre lors d'un appariement les clés et attributs associés qu'il a lui-même reçues de tiers. Ainsi, chaque dispositif transmet à l'autre dispositif :
- les clés publiques et attributs associés que ce dispositif à lui-même reçu de dispositifs tiers (entourage (neighborhood) de niveau 1) ;
- les clés publiques et attributs associés que les dispositifs tiers ont reçus d'autres dispositifs encore (entourage de niveau 2) ;
- et ainsi de suite (entourage de niveau n).

Dans la mesure où l'utilisateur du premier dispositif n'est pas toujours sûr que l'utilisateur du deuxième dispositif a lui-même bien joué le jeu pour ce qui est de son entourage (et vice versa), un Sybil attack reste possible. Autrement dit, pour le premier dispositif, le risque d'un Sybil attack est limité lorsqu'il exécute le procédé décrit ci-dessus (pour recevoir les clés publiques de la part d'autres utilisateurs directs - niveau n=0), mais le risque que l'utilisateur du deuxième dispositif n'applique pas ce procédé pour des clés qu'il aurait lui-même reçu de tiers (c'est à dire son entourage - niveau n>0) reste entier.

Ce risque est mitigé grâce aux procédés d'appariement sus-décrits, du fait qu'à chaque niveau de l'entourage (les autres utilisateurs indirects étant donc inclus), le dispositif de chaque autre utilisateur qui lui propage les clés (par clés on entend ici clés publiques/adresses et attributs associés) garantit "par construction" que le procédé d'appariement décrits ci-dessus (incluant reconnaissance biométrique et visant à n'accepter qu'un nombre restreint de clés transmis par un même autre utilisateur) est bien exécuté.

A noter que le fait que les attributs incluent des formes canoniques de données biométriques permet à chaque noeud d'exiger un nombre restreint de clés dans l'ensemble de l'entourage (pas seulement au niveau zéro mais à tous les niveaux). En effet, un même utilisateur qui fournirait des clés différentes à des dispositifs différents aurait les mêmes attributs biométriques pour ces clés, ce qui permettrait de ne pas les accepter ces clés supplémentaires d'un même utilisateur lorsqu'elles apparaissent dans un entourage.

Cet aspect permet ainsi que les dispositifs en question soient trusted en ce qu'ils possèdent chacun une clé privée secrète (accessible par le dispositif seul) lui permettant de fournir une attestation des traitements effectués et de l'intégrité de ces traitements (en fournissant le hash du code exécuté), et de signer automatiquement les données qu'ils fournissent (avec leurs clés secrètes respectives), la clé publique de signature (permettant de décrypter la signature) étant elle-même signée (certifiée) par le fabricant du dispositif, et qu'avec chaque clé publique transmise au préalable par un autre dispositif soit également transmise la signature de ce dernier ainsi que l'identité (la clé publique) de son fabricant - un dispositif qui reçoit l'entourage d'un autre dispositif ayant ainsi l'information du fabricant de cet autre dispositif et pouvant vérifier que le procédé en question a bien été exécuté lors de leurs transmission. (Les WND décrits dans les demandes PCT précités peuvent ainsi jouer le rôle de tels dispositifs).

Ainsi, l'entourage transmis vers le dispositif de l'utilisateur par un autre dispositif comprend non seulement les clés publiques (de différents niveaux) que comprend l'entourage, mais aussi les signatures de ces clés publiques par les dispositifs qui les ont fournies et leurs certificats respectifs (i.e. les signatures, par les fabricants respectifs, des clés publiques permettant de décrypter lesdites signatures par les dispositifs) qui garantissent que c'est bien le procédé (de reconnaissance biométrique avec codes captés, permettant de mitiger les attaques MitM et Sybil) décrit ci-dessus qui a été exécuté.

### IV - Sensor Block

On propose ici une sécurisation supplémentaire des systèmes de traitement de données, plus particulièrement des systèmes sur puce (SoC).

Des attaques connues contre des systèmes de traitement de données incluent différentes sortes de Fault Attack, telles qu'en faisant varier la vitesse de l'horloge ou en envoyant des photons sur les transistors pour en déduire des informations.

Comme déjà évoqué, les PUF (physical unclonable function) sont des mécanismes de sécurisation basés sur des phénomènes physiques permanents au moment du Power On du système. Cependant un "power supply attack" est possible : lorsque qu'une information sensible telle qu'une clé cryptographique est en mémoire, et que l'alimentation est coupée avant qu'elle ne soit effacée, il y a des moyens de la déceler.

On propose ici de mettre en oeuvre une détection de telles attaques dans la puce elle-même, au moyen de capteurs de température, de lumière, de tension, de fréquence d'horloge, etc., qui doivent "continuellement" notifier le bon fonctionnement de la puce. Ainsi les messages émis par la puce ne sont valides que sur preuve, émise par une autorité, qui avantageusement peut être décentralisée, de non-détection d'une attaque, cette preuve étant générée sur la base de la non-interruption du flot de ces notifications.

### 1) Cadre général

Une puce SoC incorpore un « Wallet Node » (WN) décrit dans la demande WO2016120826A2 ou WO20171221287A2, incorporant une clé privée secrète.

Un fabricant de la puce, au nom d'une autorité, signe la clé publique du WN (ou une adresse qui en est dérivée).

Chaque message émis par la puce (« Wallet Message » WM) inclut le haché du programme WP censé être exécuté par le WN destinataire, ce haché étant noté #WP.

### 2) Blocs de détection

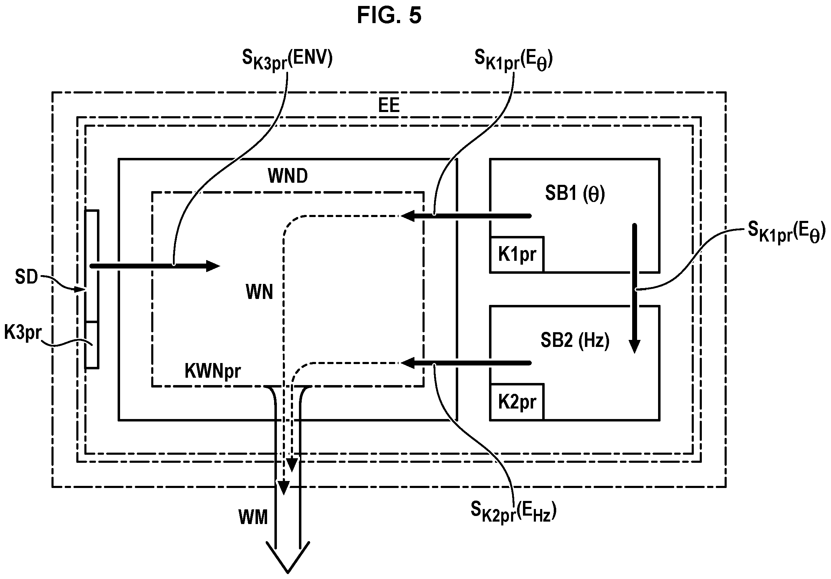

En référence à la Figure 5, une pluralité de blocs de détection (Sensor Blocks), ici SB1 et SB, surveillent des paramètres opératoires du circuit de traitement sécurisé à surveiller, ici un WND sous forme d'un SoC implémentant un WN, et se contrôlent également mutuellement et génèrent des rapports (et des Logs) de bon fonctionnement ou d'alerte envoyés à des entités qui sont sous la tutelle de l'autorité contrôlant la diffusion des SoC.

Ici, le bloc de détection SB1 surveille la température du circuit, et génère un signal d'état de température E_{θ} qu'il signe avec une clé secrète inaccessible de l'extérieur K1pr, typiquement la clé privée d'une paire de clés publique/privée, cette signature d'état étant communiquée au circuit WND. Le bloc de détection SB2 surveille quant à lui la fréquence d'horloge du circuit, et génère un signal d'état d'horloge E_{Hz} qu'il signe avec une clé secrète inaccessible de l'extérieur K2pfr, cette signature d'état étant communiquée au circuit WND.

Préférentiellement, chaque bloc de détection surveille également l'état de l'autre bloc de détection en recevant la signature d'état de celui-ci, et est également capable de générer et de signaler un état anormal au WND en cas de défaut (typiquement absence de signature d'état, ou signature d'état incorrecte (anormalité)).

Parallèlement une structure de détection d'enveloppe SD disposant de sa propre clé secrète K3pr surveille un état d'intégrité ENV d'une enveloppe externe EE et fournit au circuit WND une signature de cet état d'intégrité.

Chaque SB est avantageusement mis en oeuvre selon une combinaison de technologies différentes, afin que l'attaquant ne puisse pas hacker plus d'un SB à la fois dans un intervalle de temps donné.

Par exemple l'un des SB est réalisé en technologie MCML (MOS Current Mode Logic) tandis qu'un est réalisé en technologie CMOS, avec éventuellement une gigue aléatoire sur les signaux d'horloge (« random jitter on clock signais » en terminologie anglo-saxonne) pour ajouter du bruit contre les attaques latérales (voir par exemple US2011285421A1, US2011285420A1 ou US2011260749A1 et documents citants ou cités).

D'une façon générale, chaque bloc SB peut surveiller au moins un paramètre parmi par exemple la température, la lumière, la tension, la fréquence d'horloge du circuit.

Les SB envoient régulièrement des notifications signées vers des entités qui sont sous la tutelle de l'autorité. Ces notifications peuvent être des rapports de bon fonctionnement signés par chacun des SB, et/ou des logs de ces rapports. La notification de Logs (successions chronologiques de rapports) permet d'envoyer des notifications moins fréquemment et donc de tolérer des non-disponibilités temporaires des moyens de communication entre le WN et l'entité destinataire.

### 3) Séquencement

Périodiquement, chaque SB d'un WN génère son rapport (de bon fonctionnement ou d'alerte en cas de mauvais fonctionnement), le signe avec sa clé privée mémorisée dans le SB, et notifie ce rapport à l'autre SB (ou à chaque autre SB) du même WN. Dans le cas de plusieurs SB, cette transmission peut s'effectuer en étoile ou de proche en proche de manière circulaire.

Un deuxième SB auquel un premier SB a notifié un rapport peut par exemple le contresigner (au cas où il le confirme), l'ajoute à son log et le retourne au premier SB (ou de manière circulaire, de proche en proche jusqu'à aboutir au premier).

Ledit premier SB remplace alors dans le log le rapport qu'il avait enregistré avec sa signature seule et transmis à l'origine.

Périodiquement (ou dès que possible) les logs sont envoyés auxdites entités sous la tutelle de l'autorité, en étant incorporés à des Wallet Messages WM.

Lesdites entités retournent des certificats (signés) de bon fonctionnement couvrant un certain intervalle de temps dans le futur pour un WN donné (identifié par sa clé publique ou une adresse qui en est dérivée, elle-même certifiée par fabricant sous la tutelle d'une autorité comme mentionné au début).

Chaque message WM émis n'est valide que s'il comporte un tel certificat de bon fonctionnement, et que pendant l'intervalle de temps donné dans ce certificat.

Selon une variante, un WN peut solliciter un certificat de bon fonctionnement lorsqu'il doit envoyer un WM particulier.

Avantageusement, lesdites entités qui sont sous la tutelle d'une autorité sont des entités déléguées (déléguées par l'autorité en question) et forment ainsi une pluralité d'entités délégués aptes à certifier les WN. Dans un certificat de bon fonctionnement, l'entité déléguée communique la signature, par l'autorité, de sa propre clé publique (cette dernière permettant de décrypter son certificat).

Selon une autre variante, les WN connectés en réseau peuvent jouer le rôle desdites entités, offrant ainsi une solution p2p de contrôle mutuel (en réseau) des WN.

Enfin le fait de bien séparer les blocs de détection SB de la partie Wallet Node WN dans la puce SoC est avantageux pour préserver les performances du WN.

### V - Protocole à 3 niveaux

### 1) Principe général

On peut combiner les différentes approches décrites dans le présent mémoire.

D'abord, la signature d'enveloppe est initialement communiquée par un dispositif à ses dispositifs miroirs (typiquement aux WND miroirs pour le WN exécuté dans le cas d'une implémentation selon WO2016120826A2 et/ou WO2017122187A2), et ces dispositifs vérifient mutuellement leur signature d'enveloppe.

En outre, ces dispositifs miroirs vérifient mutuellement leurs signatures d'enveloppe ES à chaque interaction.

Plus précisément, l'ES courante et les différents logs (log d'ES, log de sensor block, etc.) d'un dispositif donné sont transmis avec chaque message (tel que WM) émis, et donc communiqués au dispositif destinataire.

Un dispositif miroir est donc apte à vérifier le log et vérifier également l'ES courante accompagnant le WM en le comparant avec l'ES reçue initialement.

Le protocole à 3 niveaux est le suivant :
- si la vérification au niveau de l'ES courante échoue, alors à partie de ce moment tous les WM fournis par ce WND sont considérés comme non valides et le dispositif implémentant ce WND) est blacklisté ;
- si les logs (Sensor Blocks, BIST (Built-In Self Test utilisé typiquement pour tester la clé secrète d'un SoC), etc.) montrent que le WND a été fraudé, alors le WND est blacklisté ;
- si le la vérification de l'ES et la vérification des logs montrent que le WND n'a jamais été fraudé, mais que les outputs des miroirs montrent une incohérence avec les outputs du WND, alors c'est le fabricant du WND en question qui est blacklisté.

Le fait qu'un WND ou qu'un fabricant de WND est blacklisté est propagé dans le réseau de proche en proche (de noeud en noeud) par un mécanisme de propagation approprié basé par exemple sur des WM dédiés.

### 2) Pondération des miroirs par fabricants

Lors de l'établissement d'un ensemble de miroirs, d'autres dispositifs sont sélectionnés comme miroirs par un dispositif donné en fonction de leurs fabricants respectifs. Les fabricants sont pondérés en fonction de leurs utilisateurs actifs, comme décrit dans la première partie. A chaque niveau dans l'entourage, le dispositif a comme objectif de maximiser la diversité des fabricants tout en les pondérant). En outre, lorsqu'on parcourt les entourages dans un sens croissant, un dispositif a comme objectif de maximiser la diversité des fabricants des autres dispositifs à chaque niveau de l'entourage, par rapport aux fabricants des autres dispositifs respectifs correspondants de niveau inférieur qui les avaient communiqués.

### VI - Applications

### 1) Transactions sécurisées

Transactions de transfert d'unités de comptes, telles que des cryptomonnaies, ou encore transactions d'engagements tels que des engagements de couverture de risques (voir documents WO2016120826A2, WO2017122187A2 ou encore US2017091750A1 au nom du Demandeur).

### 2) Transactions mettant en jeu des interactions avec le monde physique

D'une façon générale, les contrats intelligents basés une chaîne de blocs sont limités à la mise en oeuvre d'opérations logiques, seules celles-ci pouvant être répliquées sur différentes machines (mineurs/validateurs) pour assurer la fiabilité du système.

Les enseignements décrits ici, en permettant à des environnements de confiance de coopérer avec des capteurs et/ou actionneurs sans atteinte à cette confiance, permettent d'exploiter des contrats intelligents qui vont être capables d'engendrer lors de leur exécution des signaux de commande vers des actionneurs sécurisés (verrous, etc.) et/ou de prendre comme entrée des signaux fournis par des capteurs sécurisés, étendant ainsi l'univers des contrats intelligents à l'ensemble de la chaîne économique (production, livraison de biens ou de services), alors que l'état de l'art en matière de contrats intelligents, basés sur une chaîne de blocs, est limitée à des transactions sur unités de compte, à l'authentification, etc.

### 3) Photos, vidéos ou prises de son authentiques et horodatées

Le but est ici de prouver un état de fait litigieux dans le monde réel en en fournissant une photo horodatée et géolocalisée, en prouvant également que les moyens pour générer cette photo - en l'occurrence les composants caméra et GPS - n'ont pas été remplacés ou déplacés (relativement à la position du WND), ce qui revient à fournir la preuve que l'enveloppe du dispositif est resté intacte.

### 4) Ouverture d'un service et paiement

Un contrat intelligent permet ici de déclencher un paiement lorsqu'une serrure s'ouvre, ce qui est détecté par un composant capteur sécurisé au sein d'un circuit de traitement sécurisé qui ici fait partie de la serrure en question. Les enseignements décrits ici permettent de fournir la preuve que le composant capteur de position de serrure en question n'a pas été remplacé ou déplacé, par exemple grâce au mécanisme de signature d'enveloppe.

## Revendications

1. Procédé de sécurisation des échanges entre des première et deuxième entités dans une architecture en P2P, chaque entité comprenant un circuit de traitement sécurisé tel qu'un Wallet Node Device, WND, possédant une clé privée et au moins un dispositif détecteur apte à détecter l'état normal/anormal d'un paramètre d'environnement du circuit, le ou chaque dispositif comprenant une clé privée secrète permettant de signer une information d'état normal/anormal pour le dispositif en question, le procédé comprenant les étapes suivantes au niveau de la première entité :
- détection au niveau du dispositif détecteur, de l'état normal ou anormal du paramètre d'environnement du circuit,
- signature d'un contenu de message à envoyer à la deuxième entité avec ladite clé privée dudit circuit de traitement sécurisé,
- signature de l' information d'état normal/anormal avec ladite clé privée dudit dispositif,
- génération d'un message comprenant le contenu de message signé et l'information d'état normal/anormal signée, et
- envoi dudit message vers la deuxième entité.

2. Procédé selon la revendication 1, mis en oeuvre dans une entité comprenant au moins deux dispositifs détecteurs aptes à détecter l'état normal/anormal d'au moins deux paramètres d'environnement du circuit différents, comprenant la réception, par chaque dispositif détecteur, de la signature d'information d'état normal anormal d'au moins un autre dispositif détecteur et comprenant la vérification, par un moyen de traitement, de ladite signature.

3. Procédé selon la revendication 2, lequel comprend la génération, par le moyen de traitement, d'une information d'état normal/anormal de l'autre dispositif détecteur, signée avec sa propre clé privée.

4. Procédé selon l'une des revendications 1 à 3, dans lequel une absence d'information d'état à fournir par un dispositif correspond à un état anormal dudit dispositif.

5. Procédé selon l'une des revendications 1 à 4, dans lequel le ou chaque paramètre d'environnement est choisi dans un groupe comprenant les paramètres opératoires du circuit et l'intégrité d'une enveloppe entourant le circuit de traitement sécurisé.

6. Procédé selon la revendication 5, mis en oeuvre dans une entité comprenant au moins deux dispositifs détecteurs dont l'un pour un paramètre opératoire et un autre pour l'intégrité d'une enveloppe, dans lequel l'enveloppe entoure également le dispositif détecteur du paramètre opératoire.

7. Procédé selon la revendication 5, mis en oeuvre dans une entité comprenant un module de capteur(s) et/ou actionneur(s), dans lequel un dispositif pour l'intégrité d'une enveloppe, l'enveloppe entoure également ledit module.

8. Procédé selon la revendication 7, mis en oeuvre dans une entité comprenant en outre un dispositif détecteur d'état normal/anormal d'au moins un capteur et/ou d'un actionneur, le procédé comprenant la détection de l'état normal/anormal dudit au moins un capteur et/ou actionneur par ledit dispositif détecteur.

9. Procédé selon l'une des revendications 1 à 8, mis en oeuvre dans une entité comprenant au moins deux enveloppes respectivement pour au moins deux unités distinctes de l'entité, dans lequel un paramètre d'environnement comprenant une intégrité d'enveloppe de l'une des unités est détecté par un dispositif détecteur d'une autre unité.

10. Procédé selon l'une des revendications 1 à 9, comprenant la génération périodique des informations d'état normal/anormal signées aux fins de transmission à distance à au moins un dispositif vérificateur en vue de la vérification de la continuité d'un état normal, la mémorisation locale de celles-ci pour faire face à d'éventuelles indisponibilités d'un moyen de communication à distance entre ledit circuit de traitement sécurisé et ledit dispositif vérificateur, et la transmission à ce dernier l'ensemble des informations d'état signées manquantes une fois le moyen de communication rétabli.

11. Procédé selon la revendication 10, dans lequel le dispositif vérificateur est un dispositif d'une autorité centrale.

12. Procédé selon la revendication 10, dans lequel ledit au moins un dispositif vérificateur comprend un ensemble de dispositifs vérificateurs formés de circuits implémentant des miroirs vis-à-vis du circuit de traitement sécurisé.

13. Procédé selon l'une des revendications 1 à 12, comprenant un appariement initial des entités comprenant la transmission d'une signature d'état normal/anormal générée par un dispositif détecteur d'une entité vers l'autre entité, et réciproquement, et la vérification par chaque entité, lors d'une interaction avec l'autre entité, que sa signature d'état normal/anormal révèle un état normal

14. Procédé la revendication 13, dans lequel l'appariement met en jeu des données biométriques, lesdites données biométriques étant utilisées pour limiter le nombre possible de paires de clés publique/privée par individu dans le réseau.

15. Procédé selon la revendication 13 ou 14, dans lequel l'appariement comprend au moins une technique choisie parmi un échange de données biométriques, un échange de codes aléatoires générés au niveau de chaque dispositif, la génération d'un signal physique commun.

## Patentansprüche

1. Verfahren zum Sichern von Austauschen zwischen einer ersten und einer zweiten Entität in einer P2P-Architektur, jede Entität umfassend eine gesicherte Verarbeitungsschaltung wie eine Wallet-Knoten-Vorrichtung, WND, die einen privaten Schlüssel besitzt, und mindestens eine Erkennungsvorrichtung, die geeignet ist, den normalen/abnormalen Zustand eines Umgebungsparameters der Schaltung zu erkennen, die oder jede Vorrichtung umfassend einen geheimen privaten Schlüssel, der es ermöglicht, eine Information über den normalen/abnormalen Zustand für die betreffende Vorrichtung zu signieren, das Verfahren umfassend die folgenden Schritte an der ersten Entität:
- Erkennen an der Erkennungsvorrichtung, des normalen oder abnormalen Zustands des Umgebungsparameters der Schaltung,
- Signieren eines Nachrichteninhalts, der an die zweite Entität gesendet werden soll, mit dem privaten Schlüssel der gesicherten Verarbeitungsschaltung,
- Signieren der Informationen über den normalen/abnormalen Zustand mit dem privaten Schlüssel der Vorrichtung,
- Erzeugen einer Nachricht, umfassend den signierten Nachrichteninhalt und die signierten Informationen über den normalen/abnormalen Zustand, und
- Senden der Nachricht an die zweite Entität.

2. Verfahren nach Anspruch 1, das in einer Entität umgesetzt wird, umfassend mindestens zwei Erkennungsvorrichtungen, die geeignet sind, den normalen/abnormalen Zustand von mindestens zwei unterschiedlichen Umgebungsparametern der Schaltung zu erkennen, umfassend das Empfangen, durch jede Erkennungsvorrichtung, der Signatur von Informationen über den normalen/abnormalen Zustand von mindestens einer anderen Erkennungsvorrichtung und umfassend das Überprüfen, durch ein Verarbeitungsmittel, der Signatur.

3. Verfahren nach Anspruch 2, das das Erzeugen, durch das Verarbeitungsmittel, einer Information über den normalen/abnormalen Zustand der anderen Erkennungsvorrichtung umfasst, die mit ihrem eigenen privaten Schlüssel signiert ist.

4. Verfahren nach einem der Ansprüche 1 bis 3, wobei ein Fehlen der Zustandsinformationen, die durch eine Vorrichtung bereitgestellt werden sollen, einem abnormalen Zustand der Vorrichtung entspricht.

5. Verfahren nach einem der Ansprüche 1 bis 4, wobei der oder jeder Umgebungsparameter aus einer Gruppe ausgewählt wird, umfassend die Betriebsparameter der Schaltung und die Integrität einer Hülle, die die gesicherte Verarbeitungsschaltung umgibt.

6. Verfahren nach Anspruch 5, das in einer Entität umgesetzt wird, umfassend mindestens zwei Erkennungsvorrichtungen, von denen eine für einen Betriebsparameter und eine andere für die Integrität einer Hülle steht, wobei die Hülle auch die Erkennungsvorrichtung des Betriebsparameters umgibt.

7. Verfahren nach Anspruch 5, das in einer Entität umgesetzt wird, umfassend ein Modul von (einem) Sensor(en) und/oder (einem) Aktuator(en), darin eine Vorrichtung für die Integrität einer Hülle, wobei die Hülle auch das Modul umgibt.

8. Verfahren nach Anspruch 7, das in einer Entität umgesetzt wird, umfassend ferner eine Vorrichtung zum Erkennen des normalen/abnormalen Zustands von mindestens einem Sensor und/oder von einem Aktuator, das Verfahren umfassend das Erkennen des normalen/abnormalen Zustands des mindestens einen Sensors und/oder Aktuators durch die Erkennungsvorrichtung.

9. Verfahren nach einem der Ansprüche 1 bis 8, das in einer Entität umgesetzt wird, umfassend mindestens zwei Hüllen jeweils für mindestens zwei verschiedene Einheiten der Entität, wobei ein Umgebungsparameter, umfassend eine Hüllenintegrität einer der Einheiten, durch eine Erkennungsvorrichtung einer anderen Entität erfasst wird.

10. Verfahren nach einem der Ansprüche 1 bis 9, umfassend das periodische Erzeugen von signierten Informationen über den normalen/abnormalen Zustand zum Zwecke einer Fernübertragung an mindestens eine Überprüfungsvorrichtung in Hinblick auf die Überprüfung der Kontinuität eines normalen Zustands, das lokale Speichern derselben, um mit möglichen Nichtverfügbarkeiten eines Fernkommunikationsmittels zwischen der gesicherten Verarbeitungsschaltung und der Überprüfungsvorrichtung umzugehen, und das Übertragen des Satzes der fehlenden signierten Zustandsinformationen an letztere, sobald das Kommunikationsmittel wiederhergestellt ist.

11. Verfahren nach Anspruch 10, wobei die Überprüfungsvorrichtung eine Vorrichtung einer zentralen Behörde ist.

12. Verfahren nach Anspruch 10, wobei die mindestens eine Überprüfungsvorrichtung einen Satz von Überprüfungsvorrichtungen umfasst, die aus Schaltungen ausgebildet werden, die Spiegel gegenüber der gesicherten Verarbeitungsschaltung implementieren.

13. Verfahren nach einem der Ansprüche 1 bis 12, umfassend eine anfängliche Paarung von Entitäten, umfassend die Übertragung einer Signatur des normalen/abnormalen Zustands, die durch eine Erkennungsvorrichtung erzeugt wird, von einer Entität zu der anderen Entität und umgekehrt, und die Überprüfung durch jede Entität bei einer Interaktion mit der anderen Entität, dass ihre Signatur des normalen/abnormalen Zustands einen normalen Zustand offenbart.

14. Verfahren nach Anspruch 13, wobei die Paarung biometrische Daten ins Spiel bringt, wobei die biometrischen Daten zum Begrenzen der möglichen Anzahl von Paaren von öffentlichen/privaten Schlüsseln pro Person in dem Netzwerk verwendet werden.

15. Verfahren nach Anspruch 13 oder 14, wobei die Paarung mindestens eine Methode umfasst, die aus einem Austausch biometrischer Daten, einem Austausch von Zufallscodes, die an jeder Vorrichtung erzeugt werden, der Erzeugung eines gemeinsamen physikalischen Signals ausgewählt wird.

## Claims

1. Method for securing exchanges between first and second entities in a P2P architecture, each entity comprising a secure processing circuit such as a Wallet Node Device, WND, possessing a private key and at least one detector device capable of detecting the normal/abnormal state of an environmental parameter of the circuit, the or each device comprising a secret private key making it possible to sign normal/abnormal state information for the device in question, the method comprising the following steps at the level of the first entity :
- detection at the level of the detector device, of the normal or abnormal state of the circuit environment parameter,
- signature of message content to be sent to the second entity with said private key of said secure processing circuit,
- signature of the normal/abnormal state information with said private key of said device,
- generation of a message comprising the signed message content and the signed normal/abnormal status information, and
- sending said message to the second entity.

2. Method according to claim 1, implemented in an entity comprising at least two detector devices capable of detecting the normal/abnormal state of at least two different environmental parameters of the circuit, comprising reception, by each detector device, of the abnormal normal state information signature of at least one other detector device and comprising the verification, by processing means of said signature.

3. Method according to claim 2, which comprises the generation, by the processing means, of normal/abnormal state information of the other detector device, signed with its own private key.

4. Method according to one of claims 1 to 3, in which an absence of status information to be provided by a device corresponds to an abnormal state of said device.

5. Method according to one of claims 1 to 4, in which the or each environment parameter is chosen from a group comprising the operating parameters of the circuit and the integrity of an envelope surrounding the secure processing circuit.

6. Method according to claim 5, implemented in an entity comprising at least two detector devices, one of which for an operating parameter and another for the integrity of an envelope, in which the envelope also surrounds the device detector of the operating parameter.

7. Method according to claim 5, implemented in an entity comprising a sensor(s) and/or actuator(s) module, in which a device for the integrity of an envelope, the envelope also surrounds said module.

8. Method according to claim 7, implemented in an entity further comprising a normal/abnormal state detector device of at least one sensor and/or an actuator, the method comprising the detection of the normal/abnormal state of said at least one sensor and/or actuator by said detector device.

9. Method according to one of claims 1 to 8, implemented in an entity comprising at least two envelopes respectively for at least two distinct units of the entity, in which an environment parameter comprising an envelope integrity of one of the units is detected by a detector device of another unit.

10. Method according to one of claims 1 to 9, comprising periodic generation of the signed normal/abnormal status information for purpose of remote transmission to at least one verifier device for verifying the continuity of a normal state, the local memorization of that information to deal with possible unavailability of a means of remote communication between said secure processing circuit and said verifier device, and the transmission to the latter of all the missing signed status information once the means of communication restored.

11. Method according to claim 10, in which the verification device is a device of a central authority.

12. Method according to claim 10, in which said at least one verifier device comprises a set of verifier devices formed of circuits implementing mirrors of the secure processing circuit.

13. Method according to one of claims 1 to 12, comprising an initial pairing of entities comprising the transmission of a normal/abnormal state signature generated by a detector device from one entity to the other entity, and vice versa, and the verification by each entity, during an interaction with the other entity, that its normal/abnormal state signature reveals a normal state.

14. The method of claim 13, wherein the matching involves biometric data, said biometric data being used to limit the possible number of public/private key pairs per individual in the network.

15. Method according to claim 13 or 14, in which the matching comprises at least one technique chosen from an exchange of biometric data, an exchange of random codes generated at the level of each device, the generation of a physical common signal.
